# EUROPÄISCHE PATENTSCHRIFT

(11) **EP 1 050 205 B1**
(45) Veröffentlichungstag und Bekanntmachung des Hinweises auf die Patenterteilung: **24.09.2003**
(21) Anmeldenummer: 00107742.9
(22) Anmeldetag: 11.04.2000
(51) Int. Cl.: A01D 78/10

(54) **Heuwerbungsmaschine**
Haymaking machine
Machine de fenaison

(30) Priorität: 05.05.1999 DE 19920755
(43) Veröffentlichungstag der Anmeldung: 08.11.2000
(73) Patentinhaber: CLAAS Saulgau GmbH, 88340 Bad Saulgau (DE)
(72) Erfinder: Deni, Franz, 88348 Saulgau (DE)

(56) Entgegenhaltungen:
- EP-A- 0 289 864
- EP-A- 0 806 133
- EP-A- 0 834 247
- EP-A- 0 960 559
- DE-A- 4 111 267
- DE-U- 9 417 375
- US-A- 4 615 397
- US-A- 5 921 325

## Beschreibung

Die Erfindung betrifft ein Verfahren zum Verschwenken einer Heuwerbungsmaschine von der Arbeits- in eine Nichtarbeits- oder auch Transportstellung gemäß dem Oberbegriff des Anspruchs 1 und eine Heuwerbungsmaschine zur Durchführung dieses Verfahrens nach dem Oberbegriff des Anspruchs 2.
Eine gattungsgemäße Heuwerbungsmaschine offenbart die nicht vorveröffentlichte deutsche Patentanmeldung DE-A-198 23 555. Einem nicht verschwenkbaren Mittelrahmen sind um in Fahrtrichtung verlaufende Achsen schwenkbare Seitenrahmen zugeordnet, die jeweils über eine unterschiedliche Anzahl von um annähernd vertikale Achsen umlaufende, als Rechkreisel ausgeführte Arbeitsorgane verfügen. Während der innere verschwenkbare Seitenrahmen gemäß dem bekannten Stand der Technik so ausgeführt ist, daß der ihm zugeordnete Rechkreisel auf der der Schwenkachse dieses Seitenrahmens abgewandten Seite angeordnet ist, nimmt der zwei Rechkreisel tragende äußere Seitenrahmen einen Rechkreisel im Bereich seiner Schwenkachse auf und ist über einen keine Laufräder aufweisenden mittleren Seitenrahmen mit dem inneren Seitenrahmen verbunden. Wird nun dieser äußere Seitenrahmen um seine in Fahrtrichtung verlaufende Achse verschwenkt, legt nur das im Bereich seiner Schwenkachse angeordnete Laufrad des inneren Rechkreisels den Abstand zum Boden fest, da der mittlere laufradfreie Seitenrahmen ungehindert in Richtung Boden verschwenkt. Auf diese Weise kann es beim Verschwenken des äußeren Seitenrahmens dazu kommen, daß die in Richtung des mittleren Seitenrahmens weisenden zinkenaufnehmenden Tragarme des im Bereich der Schwenkachse angeordneten Rechkreisels den Boden berühren oder im ungünstigsten Fall in den Boden eintauchen. Dabei kann es zu erheblichen Beschädigungen der Zinken und der sie aufnehmenden Tragarme kommen, so daß die Funktion der Heuwerbungsmaschine stark beeinträchtigt wird oder vollständig ausfallen kann.

Der Erfindung liegt deshalb die Aufgabe zugrunde, eine Heuwerbungsmaschine und ein Verfahren zum Verschwenken der Heuwerbungsmaschine von der Arbeits- in eine Nichtarbeits- oder auch Transportstellung und umgekehrt vorzuschlagen, daß ein Verschwenken der Seitenrahmen von der Arbeits- in eine Nichtarbeits- oder auch Transportstellung und umgekehrt zuläßt, ohne daß dabei die Rechzinken oder die sie aufnehmenden Tragarme den Boden kontaktieren.

Erfindungsgemäß wird die Aufgabe durch ein Verfahren zum Verschwenken der Seitenrahmen einer Heuwerbungsmaschine von der Arbeits- in eine Nichtarbeits- oder auch Transportstellung und umgekehrt mit den kennzeichnenden Merkmalen des Anspruchs 1 und eine dieses Verfahren verwirklichende Heuwerbungsmaschine nach den kennzeichnenden Merkmalen des Anspruchs 3 gelöst.

Indem in einem ersten Verfahrensschritt wenigstens ein innerer Seitenrahmen in eine Zwischenposition verschwenkt wird, bevor der ihm zugeordnete wenigstens eine äußere Seitenrahmen in eine Nichtarbeits- oder auch Transportstellung gelangt, wird sichergestellt, daß der im Bereich der Schwenkachse des äußeren Seitenrahmens angeordnete Rechkreisel bei diesem Verschwenkvorgang einen Abstand zum Boden einnimmt, der sicherstellt, daß seine Rechzinken oder die rechzinkenaufnehmenden Tragarme dabei keinen Kontakt zum Boden erhalten und hierdurch auftretende Deformationen vermieden werden.
Beim Verschwenken von einer Nichtarbeits- oder auch Transportstellung in die Arbeitsposition sieht ein zweiter Verfahrensschritt vor, daß wenigstens ein innerer Seitenrahmen solange in der Zwischenposition verharrt, bis der ihm zugeordnete wenigstens eine äußere Seitenrahmen wieder seine Arbeitsposition erreicht hat, bevor der wenigstens eine innere Seitenrahmen ebenfalls in die Arbeitsposition verschwenkt, so daß die Rechzinken oder die rechzinkenaufnehmenden Tragarme des wenigstens einen äußeren Seitenrahmens wiederum keinen Kontakt zum Boden erhalten.

In vorteilhafter Weise kann diese Folgesteuerung dadurch erreicht werden, daß wenigstens ein innerer Seitenrahmen und ein äußerer Seitenrahmen über erste und zweite Verstellmittel verfügen, die miteinander in Wirkverbindung stehen, so daß die Reihenfolge des Verschwenkens der verstellmittelaufweisenden Seitenrahmen aufeinander abgestimmt erfolgt.

Im einfachsten Fall kann das - in Wirkverbindung stehen - dann erreicht werden, wenn die Verstellmittel des wenigstens einen inneren Seitenrahmens und einem äußeren Seitenrahmen Hubzylinder sind, deren kolbenstangenseitigen Volumina miteinander verbunden sind.

Eine vorteilhafte Weiterbildung der Erfindung wird dann erreicht, wenn die miteinander verbundenen Verstellmittel über ein Stellorgan verfügen, daß die Verbindung der Verstellmittel des wenigstens einen inneren und eines äußeren Seitenrahmens in Abhängigkeit von der Stellung des verschwenkbaren äußeren Seitenrahmens steuert. Auf diese Weise wird einerseits sichergestellt, daß beim Verschwenken von der Arbeits- in eine Nichtarbeits- oder auch Transportstellung stets zuerst der innere Seitenrahmen in die Zwischenposition gelangt, bevor der äußere Seitenrahmen und nachfolgend der in der Zwischenposition befindliche innere Seitenrahmen in eine Nichtarbeitsoder auch Transportstellung gelangen. Zum anderen wird beim Verschwenken von der Nichtarbeits- oder auch Transportstellung in die Arbeitsteilung durch das Stellorgan dafür gesorgt, daß der innere Rahmen beim Herunterschwenken solange in der Zwischenposition verharrt, bis der äußere Seitenrahmen seine Arbeitsstellung erreicht hat, so daß auch beim Abklappen der Seitenrahmen eine Kollision der Rechzinken und der Tragarme des im Bereich der Schwenkachse angeordneten Rechkreisels des äußeren Seitenrahmens mit dem Boden vermieden wird.

Auf konstruktiv einfache und damit kostengünstige Weise kann die Koppelung des Stellgliedes an die Bewegung des äußeren Seitenrahmens auf mechanischem Weg dadurch erreicht werden, daß ein im einfachsten Fall als Zugseil ausgeführtes Koppelglied das mechanisch verstellbare Schaltelement des Stellgliedes mit dem äußeren Seitenrahmen verbindet.

Zur Verbesserung der Funktionssicherheit der Koppelung des Stellgliedes an die Bewegung wenigstens eines äußeren Rechkreisels kann das Schaltelement des Stellgliedes elektrisch verstellbar ausgeführt sein, wobei das Stellsignal durch einen die Bewegung wenigstens eines äußeren Seitrahmens abgreifenden Sensor erzeugt wird, der bei einer bestimmten Stellung des äußeren Seitenrahmens das Öffnen oder Schließen des Stellgliedes auslöst.

Vorteilhafte Ausgestaltungen sind Gegenstand weiterer Unteransprüche und werden nachfolgend anhand eines in Zeichnungen dargestellten Ausführungsbeispiels näher erläutert.
Es zeigen
- Figur 1: eine Teilansicht einer erfindungsgemäßen Heuwerbungsmaschine in der Arbeitsstellung in Vorderansicht
- Figur 2: eine Detailansicht der erfindungsgemäßen Heuwerbungsmaschine nach Figur 1
- Figur 3: eine Detailansicht der erfindungsgemäßen Heuwerbungsmaschine nach Figur 1 mit in Zwischenposition befindlichem inneren Seitenrahmen
- Figur 4: eine Teilansicht einer erfindungsgemäßen Heuwerbungsmaschine mit schematisch dargestellten verschiedenen Lagen der Rechkreisel in Vorderansicht

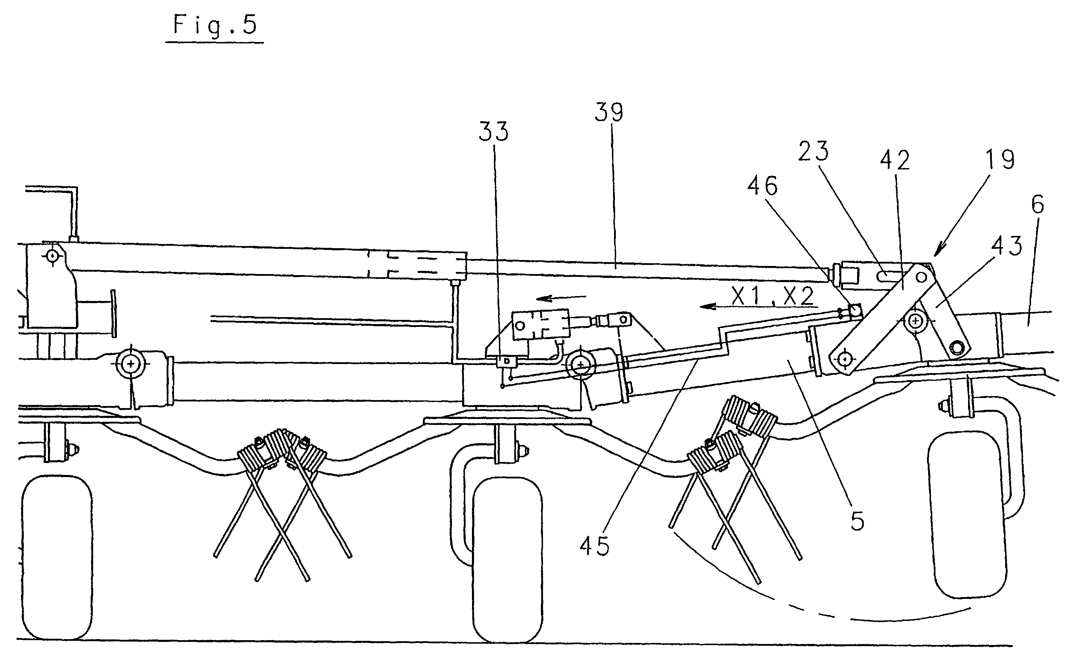

- Figur 5: eine Detailansicht der erfindungsgemäßen Heuwerbungsmaschine mit in Zwischenposition befindlichem inneren Seitenrahmen und elektronischer Hubzylindersteuerung.

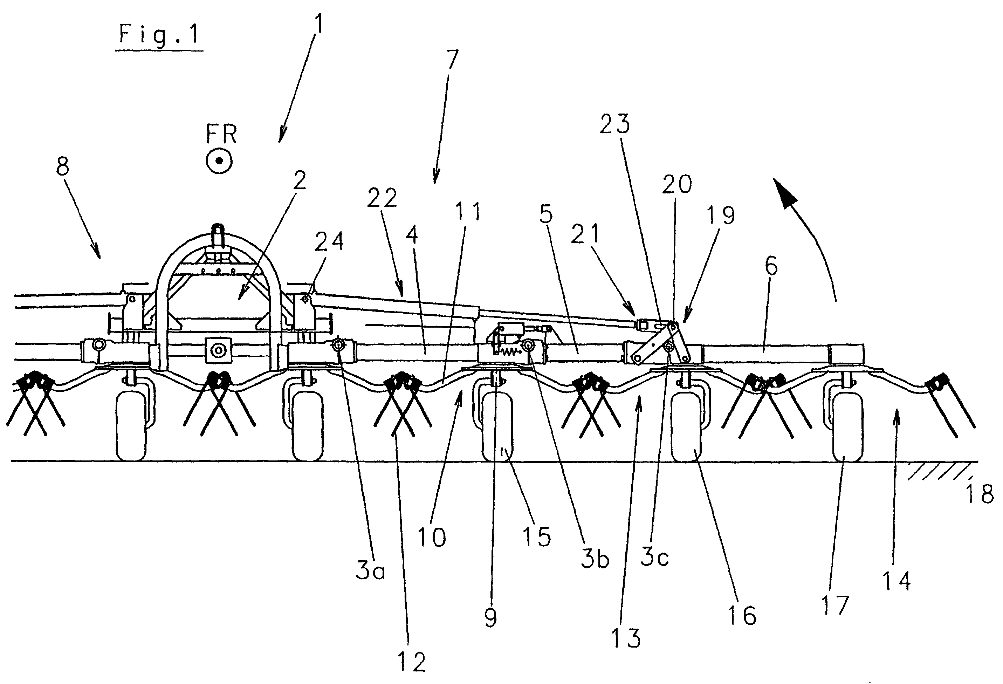

In Figur 1 ist eine Teilansicht einer erfindungsgemäßen Heuwerbungsmaschine 1 in Arbeitsteilung dargestellt, deren nichtverschwenkbarem frontseitig an einem nicht gezeigten Trägerfahrzeug adaptierbaren Mittelrahmen 2 um in Fahrtrichtung FR weisende Achsen 3a-c schwenkbare innere und äußere Seitenrahmen 4-6 quer zur Fahrtrichtung FR erstreckend zugeordnet sind. Die je einen Seitenrahmenabschnitt 7, 8 bildenden Seitenrahmen 4-6 sind so ausgeführt, daß dem mit dem Mittelrahmen 2 verbundenen Seitenrahmen 4 nur ein um eine annähernd senkrecht verlaufende Achse 9 drehbarer Rechkreisel 10 zugeordnet ist, dessen Tragarme 11 an ihren freien Enden das Erntegut aufnehmende und breitstreuende Rechzinken 12 aufnehmen, während der äußere Seitenrahmen 6 beidendig über je einen derartigen Rechkreisel 13, 14 verfügt. Jeder Rechkreisel 10, 13, 14 nimmt untenseitig wenigstens ein Laufrad 15-17 auf, über welches der jeweilige Rechkreisel 10, 13, 14 auf dem Boden 18 abgestützt wird. Dem inneren Seitenrahmen 4 ist ein weiterer mit dem äußeren Seitenrahmen 6 mittels Achse 3c und einem zweigliedrigen Koppelmechanismus 19 schwenkbar verbundener innerer arbeitsorganfreier Seitenrahmen 5 zugeordnet. Der den inneren Seitenrahmen 5 und den äußeren Seitenrahmen 6 verbindende Koppelmechanismus 19 verfügt obenseitig über ein Drehgelenk 20, welches in einer am kolbenstangenseitigen Ende 21 eines ersten Verstellmittels, eines doppeltwirkenden Hubzylinders 22, angeordneten Schlitzführung 23 in der Weise aufgenommen wird, daß sich das Drehgelenk 20 in der Arbeitsstellung der Heuwerbungsmaschine 1 in Abhängigkeit vom Bodenrelief in dieser Schlitzführung 23 quer zur Fahrtrichtung frei bewegen kann. Anderenends ist der die Schlitzführung 23 aufnehmende Hubzylinder 22 am nicht verschwenkbaren Mittelrahmen 2 um eine in Fahrtrichtung FR weisende Achse 24 verschwenkbar angelenkt.
Die inneren Seitenrahmen 4, 5 verfügen an ihren einander zugewandten Enden über Halteflansche 25, 26, die zwischen sich ein zweites Verstellmittel, einen verschwenkbar gelagerten einfachwirkenden Hubzylinder 27, aufnehmen.
Erfindungsgemäß sind die kolbenstangenseitigen Volumina 28, 29 der Hubzylinder 22, 27 über ein Leitungssystem 30 miteinander verbunden, welches durch die an sich bekannte Bordhydraulik des nicht dargestellten Trägerfahrzeugs druckbeaufschlagt werden kann. Der doppeltwirkende Hubzylinder 22 verfügt zudem über ein weiteres, mit der Bordhydraulik des Trägerfahrzeugs verbundenes Leitungssystem 31. Ferner ist in die Zu- und Ablaufleitung 32 des Hubzylinders 27 ein Absperrventil 33 eingeschaltet, dessen außenseitig angeordnetes als Doppelhebel 34 ausgeführtes Schaltelement 35 erfindungsgemäß mit einem Koppelmechanismus 36, 37 in Wirkverbindung steht, der durch Abgreifen der Schwenkbewegung des wenigstens einen äußeren Seitenrahmens 6 zu einer Verstellung des Schaltelementes 35 führt, wobei dem als Doppelhebel 34 ausgeführten Schaltelement 35 zur Unterstützung der Doppelhebelbewegung und damit des Schaltvorganges einenends eine Zugfeder 37 zugeordnet sein kann.

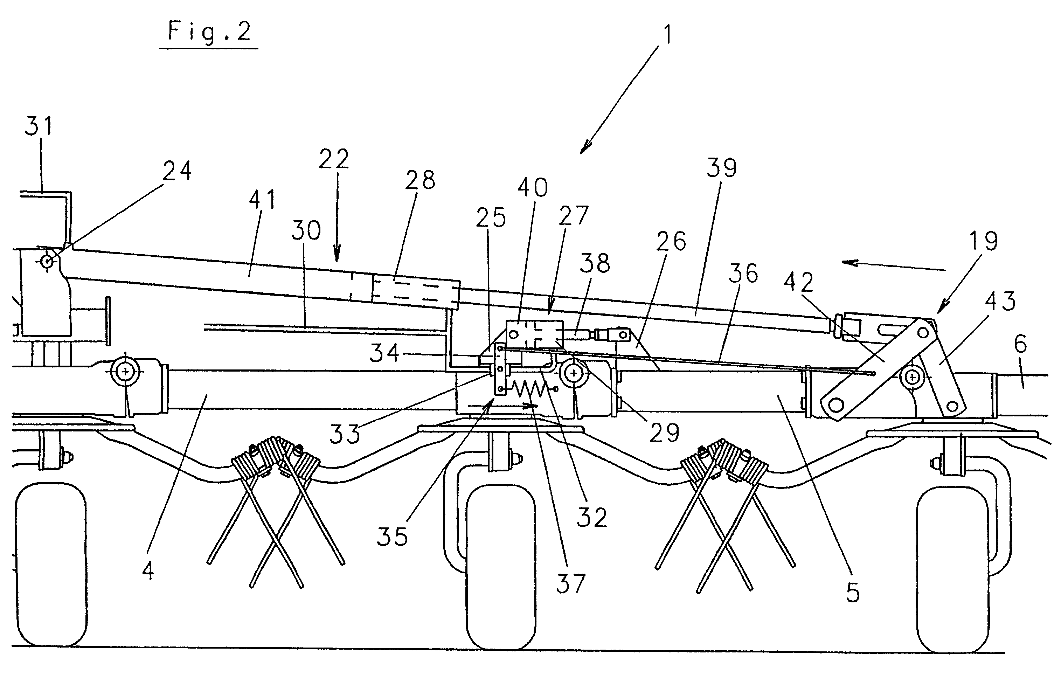

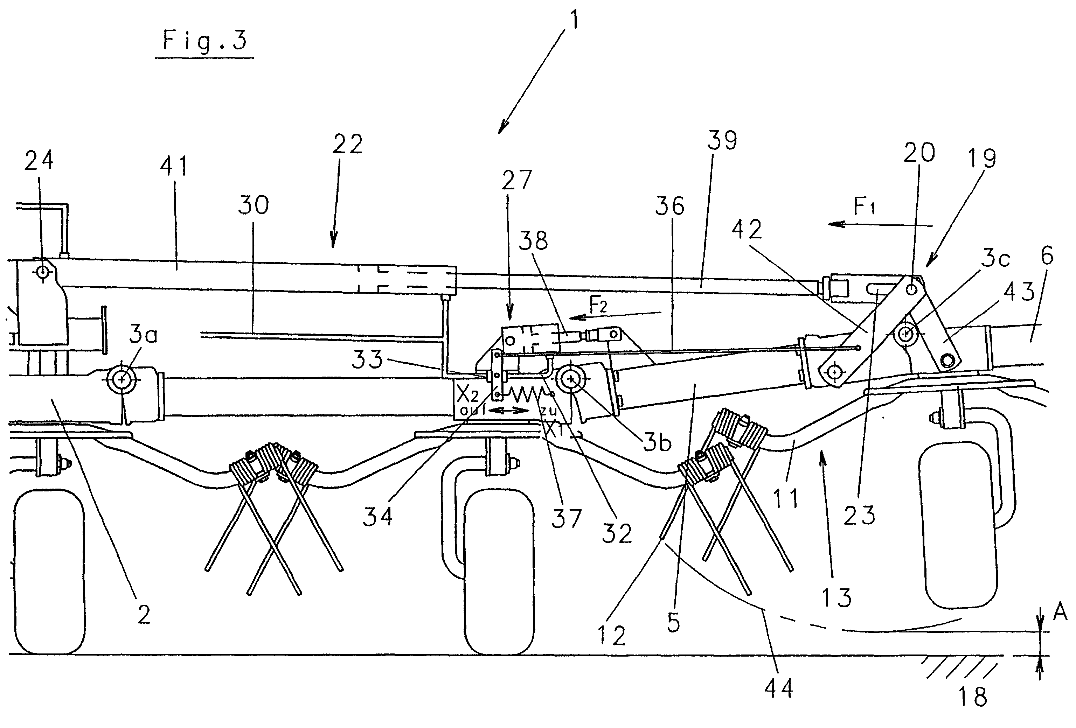

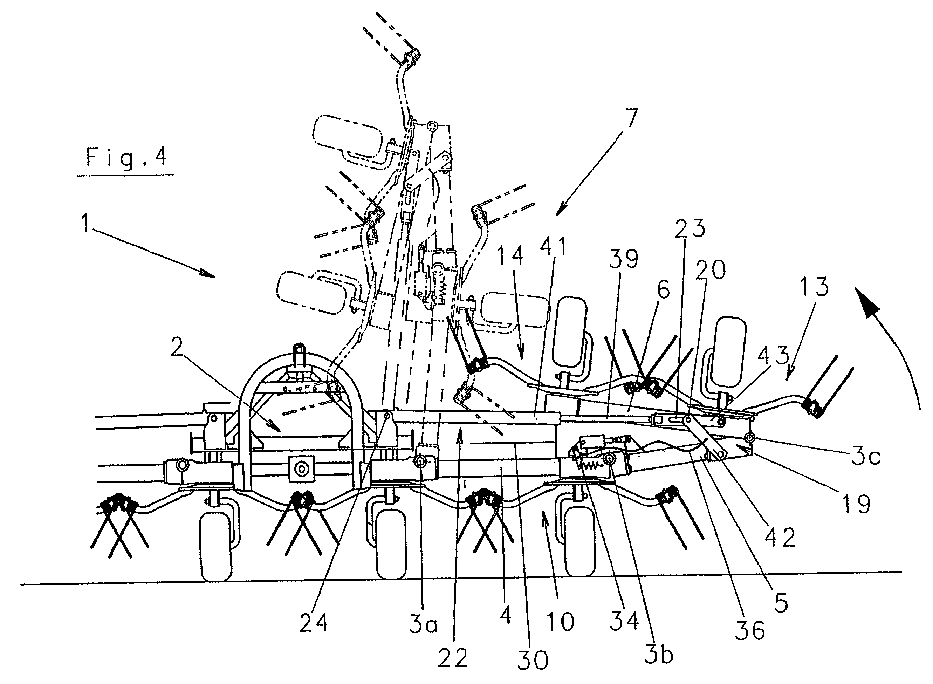

Soll nun die in Figur 2 in Arbeitstellung dargestellte Heuwerbungsmaschine 1 in Transportstellung verschwenkt werden, wird vom nicht dargestellten Trägerfahrzeug aus das Leitungssystem 30 druckbeaufschlagt, wobei in Arbeitsstellung der Heuwerbungsmaschine 1 der Doppelhebel 34 eine Position einnimmt, in der das Absperrventil 33 geöffnet ist. Nach Druckbeaufschlagung des Leitungssystems 30 und über das geöffnete Absperrventil 33 der Zu- und Ablaufleitung 32 stehen beide kolbenstangenseitigen Volumina 28, 29 der Hubzylinder 22, 27 unter Druck, so daß jede Kolbenstange 38, 39 bestrebt ist, in den jeweiligen Zylinder 40, 41 einzufahren. Die Lage der Hubzylinder 22, 27 zu den jeweiligen Seitenrahmen 5, 6 sowie zu dem aus einer am inneren Seitenrahmen 5 angelenkten Koppel 42 und einer am äußeren Seitenrahmen 6 angelenkten Koppel 43 bestehenden zweigliedrigen Koppelmechanismus 19 ist so gewählt, daß die am Hubzylinder 27 angreifende Kraft F₂ kleiner als die am Hubzylinder 22 angreifende Kraft F₁ ist, so daß bei gleichem Kolbenflächenverhältnis der Hubzylinder 22 und 27 die Kolbenstange 38 des Hubzylinders 27 bei niedrigerem Druck und damit zuerst einfährt. Andererseits ist es aus dem Stand der Technik auch bekannt über unterschiedliche Kolbenflächenverhältnisse der Hubzylinder 22, 27 sicher zu stellen, daß Kolbenstange 38 bereits bei niedrigerem Druck in den Zylinder 40 eingeschoben wird. Dabei gelangen der innere Seitenrahmen 5 und der schwenkbar mit diesem verbundene äußere Seitenrahmen 6 erfindungsgemäß in eine Zwischenposition entsprechend Figur 3.
Wird der Druck in Leitungssystem 30 weiter erhöht, bewegt sich dann auch die Kolbenstange 39 in den Zylinder 41 des Hubzylinders 22, wobei das Gelenk 20 des zweigliedrigen Koppelmechanismus 19 einseitig in der Schlitzführung 23 anliegend um Achse 24 in Richtung des Mittelrahmens 2 der Heuwerbungsmaschine 1 verschwenkt wird. Dabei schwenkt die Koppel 43 des zweigliedrigen Koppelmechanismus 19 gleichzeitig den äußeren Seitenrahmen 6 um Achse 3c in eine Nichtarbeitsstellung gemäß Figur 4 (Volliniendarstellung), wobei sich durch die Zwischenposition des inneren Seitenrahmens 5 die Rechzinken 12 auf einer Kurvenbahn 44 bewegen, die mit Abstand A zum Boden 18 verläuft, so daß der Rechkreisel 13 in die Nichtarbeitsstellung gemäß Figur 4 verschwenkt werden kann, ohne daß seine Rechzinken 12 mit dem Boden 18 kollidieren. Während dieses Verschwenkvorganges erfährt das die innere Koppel 42 mit dem Doppelhebel 34 verbindende im einfachsten Fall als Zugseil ausgeführte Koppelglied 36 eine Längenänderung (Stellsignal X1, X2), die beim Verschwenken des äußeren Seitenrahmens 6 in die Nichtarbeitsstellung zum Durchhängen des Zugseils 36 führt, wobei zu Beginn der Längenänderung der Doppelhebel 34 durch die Zugfeder 37 in die Stellung "zu" bewegt wird, so daß das Absperrventil 33 die Zu- und Ablaufleitung 32 des Hubzylinders 27 vom Leitungssystem 30 trennt und erst wieder frei gibt, wenn der innere Seitenrahmen 5 beim Verschwenken von der Transport- in die Arbeitsstellung die erfindungsgemäße Zwischenposition eingenommen hat, in der sich die Rechkreisel 13, 14 bereits wieder in Arbeitsposition befinden, so daß auch beim Verschwenken von der Nichtarbeits- oder Transportstellung in die Arbeitsstellung keine Kollision zwischen Boden 18 und den auf der Kurvenbahn 44 bewegten Rechzinken 12 auftritt.

In einer weiteren vorteilhaften Ausführungsform kann das mittels Doppelhebel 34 mechanisch verstellbare Absperrventil 33 auch elektrisch verstellbar ausgeführt sein. Zur Ansteuerung des elektrisch schaltbaren Absperrventils 33 ist ein elektrisches Leitungssystem 45 vorgesehen, welches mit einem Sensor, vorzugsweise einem induktiven Sensor 46 gekoppelt ist, der im einfachsten Fall im Schwenkbereich der den inneren Rahmen 5 mit der Schlitzführung 23 der Kolbenstange 39 verbindenden Koppel 42 des Koppelmechanismus 19 angeordnet ist. Beim Verschwenken des äußeren Seitenrahmens 6 in die Nichtarbeitsstellung gemäß Figur 4 bewegt sich die Koppel 42 in den Bereich des induktiven Sensors 46, wobei der induktive Sensor 46 ein Signal X1 erzeugt, welches das Absperrventil 33 schließt und solange geschlossen hält bis sich die Koppel 42 beim Verschwenken des äußeren Seitenrahmens 6 von der Nichtarbeits- in die Arbeitsstellung wieder aus dem Bereich des induktiven Sensors herausbewegt. Nachdem die Koppel 42 den induktiven Sensor 46 wieder freigibt, erzeugt dieser ein Stellsignal X2 welches dafür sorgt, daß das Absperrventil 33 wieder geöffnet wird. Auf diese Weise werden ebenfalls die bereits für das mechanisch verstellbare Absperrventil 33 beschriebenen Effekte erzielt, wobei der durch das Zugseil 36, die Zugfeder 37 und den Doppelhebel 34 gebildete und konstruktiv aufwendige Koppelmechanismus entfallen kann. Die Anordnung des Sensors 46 ist nicht auf die dargestellte Ausführung beschränkt. Der Sensor 46 kann auch mit jedem anderen beim Verschwenken des äußeren Seitenrahmens 6 bewegten Bauteil 39, 23, 19 oder dem äußeren Seitenrahmen 6 selbst in Wirkverbindung stehen.

### Bezugszeichenliste

- 1: Heuwerbungsmaschine
- 2: Mittelrahmen
- 3a-c: Achsen
- 4: Seitenrahmen
- 5: Seitenrahmen
- 6: Seitenrahmen
- 7: Seitenrahmenabschnitt
- 8: Seitenrahmenabschnitt
- 9: Achse
- 10: Rechkreisel
- 11: Tragarm
- 12: Rechzinken
- 13: Rechkreisel
- 14: Rechkreisel
- 15: Laufrad
- 16: Laufrad
- 17: Laufrad
- 18: Boden
- 19: Koppelmechanismus
- 20: Drehgelenk
- 21: Kolbenstangenseitiges Ende
- 22: Hubzylinder
- 23: Schlitzführung
- 24: Achse
- 25: Halteflansch
- 26: Halteflansch
- 27: Hubzylinder
- 28: Volumen
- 29: Volumen
- 30: Leitungssystem
- 31: Leitungssystem
- 32: Zu- und Ablaufleitung
- 33: Absperrventil
- 34: Doppelhebel
- 35: Schaltelement
- 36: Zugseil
- 37: Zugfeder
- 38: Kolbenstange
- 39: Kolbenstange
- 40: Zylinder
- 41: Zylinder
- 42: Koppel
- 43: Koppel
- 44: Kurvenbahn
- 45: elektrisches Leitungssystem
- 46: Sensor

- A: Abstand
- FR: Fahrrichtung
- F₁: Kraft
- F₂: Kraft
- X1: Stellsignal
- X2: Stellsignal

## Patentansprüche

1. Verfahren zum Verschwenken einer Heuwerbungsmaschine (1) von einer Arbeits- in eine Nichtarbeits- oder auch Transportstellung und umgekehrt, wobei die Heuwerbungsmaschine (1) über wenigstens zwei beiderseits an einem Mittelrahmen (2) angebrachte um in Fahrtrichtung (FR) verlaufende Achsen (3b-c) verschwenkbare Seitenrahmen (5, 6) verfügt und die Verschwenkbarkeit der miteinander gekoppelten Seitenrahmen (5, 6) eines Seitenrahmenabschnitts (7, 8) von der Arbeits- in eine Nichtarbeits- oder auch Transportstellung und umgekehrt mittels Verstellmitteln (22, 27) erfolgt und wenigstens ein Seitenrahmen (6) zumindest ein als Rechkreisel (13, 14) ausgeführtes Arbeitsorgan aufnimmt, das jeweils von wenigstens einem Laufrad (16, 17) auf dem Boden (18) abgestützt wird,
**dadurch gekennzeichnet,**
**daß** das Verschwenken wenigstens zwei benachbarter Seitenrahmen (5, 6) zumindest eines Seitenrahmenabschnitts (7, 8) von der Arbeits- in eine Nichtarbeits- oder auch Transportstellung in der Weise erfolgt, daß zuerst der wenigstens eine innere Seitenrahmen (5) in eine Zwischenposition verschwenkt wird, bevor der mit dem inneren Seitenrahmen (5) verbundene wenigstens eine äußere Seitenrahmen (6) in eine Nichtarbeits- oder auch Transportstellung verschwenkt.

2. Verfahren zum Verschwenken einer nach Anspruch 1,
**dadurch gekennzeichnet,**
**daß** der innere Seitenrahmen (5) die Zwischenposition zumindest solange einnimmt, bis der ihm benachbarte wenigstens eine äußere Seitenrahmen (6) von einer Nichtarbeits- oder auch Transportstellung wieder in die Arbeitsstellung gelangt ist.

3. Heuwerbungsmaschine zur Durchführung des Verfahrens nach Anspruch 1, wobei die Heuwerbungsmaschine (1) über wenigstens zwei beiderseits an einem Mittelrahmen (2) angebrachte um in Fahrtrichtung (FR) verlaufende Achsen (3b-c) verschwenkbare Seitenrahmen (5, 6) verfügt und die Verschwenkbarkeit der miteinander gekoppelten Seitenrahmen (5, 6) eines Seitenrahmenabschnitts (7, 8) von der Arbeits- in eine Nichtarbeits- oder auch Transportstellung und umgekehrt mittels Verstellmitteln (22, 27) erfolgt und wenigstens ein Seitenrahmen (6) zumindest ein als Rechkreisel (13, 14) ausgeführtes Arbeitsorgan aufnimmt, das jeweils von wenigstens einem Laufrad (16, 17) auf dem Boden (18) abgestützt wird,
**dadurch gekennzeichnet,**
**daß** wenigstens ein innerer verschwenkbarer Seitenrahmen (5) über ein zweites Verstellmittel (27) verfügt, das mit einem ersten Verstellmittel (22) wenigstens eines verschwenkbaren äußeren Seitenrahmens (6) in Wirkverbindung steht.

4. Heuwerbungsmaschine nach Anspruch 3,
**dadurch gekennzeichnet,**
**daß** die Verstellmittel (27, 22) des inneren Seitenrahmens (5) und des äußeren Seitenrahmens (6) Hubzylinder sein können, deren kolbenstangenseitigen Volumina (28, 29) miteinander verbunden sind.

5. Heuwerbungsmaschine nach Anspruch 4,
**dadurch gekennzeichnet,**
**daß** die Verbindung der kolbenstangenseitigen Volumina (28, 29) durch an sich bekannte Leitungssysteme (30, 32) erfolgt und durch ein Stellglied (33) steuerbar sein kann.

6. Heuwerbungsmaschine nach einem oder mehreren der Ansprüche 3 bis 5,
**dadurch gekennzeichnet,**
**daß** den in Wirkverbindung stehenden Verstellmitteln (27, 22) des inneren und äußeren Seitenrahmens (5, 6) zumindest ein Koppelglied (36, 37, 45, 46) zugeordnet ist, welches die Schwenkbewegung des wenigstens einen äußeren Seitenrahmens (6) an beliebiger Stelle abgreift und ein Stellsignal (X1, X2) erzeugt, welches das Zusammenwirken der in Wirkverbindung stehenden Verstellmittel (27, 22) des inneren und äußeren Seitenrahmens (5, 6) steuert.

7. Heuwerbungsmaschine nach Anspruch 6,
**dadurch gekennzeichnet,**
**daß** die Schwenkbewegung wenigstens eines äußeren Seitenrahmens (6) mechanisch auf das schaltbare Stellglied (33) übertragen wird.

8. Heuwerbungsmaschine nach Anspruch 7,
**dadurch gekennzeichnet,**
**daß** die mechanische Übertragung der Bewegung des äußeren Seitenrahmens (6) durch ein Zugseil (36) auf ein Schaltelement (34) des Stellgliedes (33) erfolgt, wobei das Schaltelement (34) gegen die Wirkung einer Zugfeder (37) verstellt wird.

9. Heuwerbungsmaschine nach Anspruch 6,
**dadurch gekennzeichnet,**
**daß** die Schwenkbewegung wenigstens eines äußeren Seitenrahmens (6) elektrisch auf das schaltbare Stellglied (33) übertragen wird.

10. Heuwerbungsmaschine nach Anspruch 9,
**dadurch gekennzeichnet,**
**daß** die Schwenkbewegung wenigstens eines äußeren Seitenrahmens (6) mittels Sensor (46) elektronische erfaßt und auf ein elektrisch schaltbares Stellglied (33) übertragen wird.

11. Heuwerbungsmaschine nach einem oder mehreren der vorhergehenden Ansprüche 3-10
**dadurch gekennzeichnet,**
**daß** das mechanisch oder elektrisch schaltbare Stellglied (33) als Absperrventil (33) ausgeführt ist.

## Claims

1. Process for swivelling a hay harvesting machine (1) from a working to a non-working or also transport position and vice versa, wherein the hay harvesting machine (1) has at least two swivellable side frames (5, 6) attached on both sides of a central frame (2) about axes (3b-c) running in the direction of motion (FR) and the swivellability of the side frames (5, 6) coupled with one another, of a side frame section (7, 8) from the working- into a non-working or also transport position and vice versa is provided by means of adjustment means (22, 27) and at least one side frame (6) houses at least one working part constructed as a rotary rake (13, 14), which in each case is supported by at least one running wheel (16, 17) on the ground (18), **characterized in that**,
the swivelling of at least two adjacent side frames (5, 6) of at least one side frame section (7, 8) from the working- into a non-working- or also transport position, is achieved in such a way that, at first the at least one inner side frame (5) is swivelled into an intermediate position, before the at least one outer side from (6) connected with the inner side frame (5) swivels into a non-working or also transport position.

2. Process for swivelling according to claim 1,
**characterized in that**,
the inner side frame (5) occupies the intermediate position at least until the at least one outer side frame (6) adjacent to it has returned from a non-working or also transport position to the working position.

3. Hay harvesting machine to carry out the process according to claim 1, wherein the hay harvesting machine (1) has at least two swivellable side frames (5, 6) attached on both sides of a central frame (2) about axes (3b-c) running in the direction of motion (FR) and the swivellability of the side frames (5, 6) coupled with one another, of a side frame section (7, 8) from the working- into a non-working or also transport position and vice versa is provided by means of adjustment means (22, 27) and at least one side frame (6) houses at least one working part constructed as a rotary rake (13, 14), which in each case is supported by at least one running wheel (16, 17) on the ground (18),
**characterized in that**,
at least one inner swivellable side frame (5) has a second adjustment means (27), which is operationally connected with a first adjustment means (22) of at least one swivellable outer side frame (6).

4. Hay harvesting machine according to claim 3,
**characterized in that**,
the adjustment means (27, 22) of the inner side frame (5) and of the outer side frame (6) can be lifting cylinders, the piston-rod-end volumes (28, 29) of which are connected with one another.

5. Hay harvesting machine according to claim 4,
**characterized in that**,
the connection of the piston-rod-end volumes (28, 29) is provided by cable systems (30, 32) known per se and can be controlled by an adjusting member (33).

6. Hay harvesting machine according to one or more of claims 3 to 5,
**characterized in that**,
to the operationally connected adjustment means (27, 22) of the inner and outer side frame (5,6), at least one coupling member (36, 37, 45, 46) is assigned, which measures the swivelling movement of the at least one outer side frame (6) at any point and produces an adjustment signal (X1, X2) which controls the interaction of the operationally connected adjustment means (27, 22), of the inner and outer side frame (5, 6).

7. Hay harvesting machine according to claim 6,
**characterized in that**,
the swivelling movement of at least one outer side frame (6) is transmitted mechanically to the switchable adjusting member (33).

8. Hay harvesting machine according to claim 7,
**characterized in that**,
the mechanical transmission of the movement of the outer side frame (6) is provided via a traction rope (36) to a circuit element (34) of the adjusting member (33), the circuit element (34) being displaced against the effect of a draught spring (37).

9. Hay harvesting machine according to claim 6,
**characterized in that**,
the swivelling movement of at least one outer side frame (6) is electrically transmitted to the switchable adjusting member (33).

10. Hay harvesting machine according to claim 9,
**characterized in that**,
the swivelling movement of at least one outer side frame (6) is electronically detected by means of a sensor (46) and transmitted to an electrically switchable adjusting member (33).

11. Hay harvesting machine according to one or more of the preceding claims 3-10,
**characterized in that**,
the mechanically or electrically switchable adjusting member (33) is constructed as a shut-off valve (33).

## Revendications

1. Procédé pour faire pivoter une machine de fenaison (1) d'une position de travail dans une positions de repos ou de transport et inversement, la machine de fenaison (1) comportant au moins deux châssis latéraux (5, 6) qui sont disposés de part et d'autre d'un châssis médian (2) et peuvent pivoter autour d'axes (3b-c) orientés dans la direction de déplacement (FR) et le pivotement des châssis latéraux (5, 6) couplés les uns aux autres d'une section de châssis latéral (7, 8) de la position de travail dans une position de repos ou de transport et inversement étant réalisé à l'aide de moyens de réglage (22, 27) et au moins un châssis latéral (6) recevant au moins un organe de travail conformé en toupie de fenaison t13, 14), qui prend appui sur le sol (18) par l'intermédiaire d'au une roue (16, 17), **caractérisé en ce que** le pivotement d'au moins deux châssis latéraux (5, 6) consécutifs d'au moins une section de châssis latéral (7, 8) de la position de travail dans une position de repos ou de transport a lieu de telle manière que le châssis latéral (5) intérieur au nombre d'au moins un est amené par pivotement dans une position intermédiaire avant que le châssis latéral (6) extérieur au nombre d'au moins un pivote dans une position de repos ou de transport.

2. Procédé pour faire pivoter une machine de fenaison, selon la revendication 1, **caractérisé en ce que** le châssis latéral (5) intérieur conserve la position intermédiaire au moins jusqu'à ce que le châssis latéral (6) extérieur consécutif, au nombre d'au moins un, soit ramené d'une position de repos ou de transport dans la position de travail.

3. Machine de fenaison pour la mise en oeuvre du procédé selon la revendication 1, la machine de fenaison (1) comportant au moins deux châssis latéraux (5, 6) qui sont disposés de part et d'autre d'un châssis médian (2) et peuvent pivoter autour d'axes (3b-c) orientés dans la direction de déplacement (FR) et le pivotement des châssis latéraux (5, 6) couplés les uns aux autres d'une section de châssis latéral (7, 8) de la position de travail dans une position de repos ou de transport et inversement étant réalisé à l'aide de moyens de réglage (22, 27) et au moins un châssis latéral (6) recevant au moins un organe de travail conformé en toupie de fenaison (13, 14), qui prend appui sur le sol (18) par l'intermédiaire d'au une roue (16, 17), **caractérisé en ce qu'**au moins un châssis latéral (5) intérieur dispose'd'un deuxième moyen de réglage (27) qui est relié de manière active à un premier moyen de réglage (22) d'au moins un châssis latéral (6) extérieur.

4. Machine de fenaison selon la revendication 3, **caractérisé en ce que** les moyens de réglage (27, 22) du châssis latéral (5) intérieur et du châssis latéral (6) extérieur peuvent être des vérins hydrauliques, dans lesquels les volumes (28, 29) côté tige de piston sont connectés entre eux.

5. Machine de fenaison selon la revendication 4, **caractérisé en ce que** la connexion entre les volumes (28, 29) côté tige de piston est réalisée au moyen de tuyauteries (30, 32) connues en soi et peut être contrôlée à l'aide d'un organe de réglage (33).

6. Machine de fenaison selon une ou plusieurs des revendications 3 à 5, **caractérisé en ce qu'**aux moyens de réglage (27, 22) liés de manière active des châssis latéraux (5, 6) intérieur et extérieur est associé au moins organe de couplage (36, 37, 45, 46), qui détecte en un point quelconque le mouvement de pivotement du châssis latéral (6) extérieur, au nombre d'au moins un, et produit un signal de réglage (X1, X2) qui contrôle l'action conjuguée des moyens de réglage (27, 22) liés de manière active des châssis latéraux (5, 6) intérieur et extérieur.

7. Machine de fenaison selon la revendication 6, **caractérisé en ce que** le mouvement de pivotement d'au moins un châssis latéral (6) extérieur est transmis par voie mécanique à l'organe de réglage (33) commandé.

8. Machine de fenaison selon la revendication 7, **caractérisé en ce que** la transmission mécanique du mouvement du châssis latéral (6) extérieur est réalisée à l'aide d'un câble de traction (36) agissant sur un élément de déclenchement (34) de l'organe de réglage (33), l'élément de déclenchement (34) étant déplacé à l'encontre de la force d'un ressort de traction (37).

9. Machine de fenaison selon la revendication 6, **caractérisé en ce que** le mouvement de pivotement d'au moins un châssis latéral (6) est transmis par voie électrique à l'organe de réglage (33) commandé.

10. Machine de fenaison selon la revendication 9, **caractérisé en ce que** le mouvement de pivotement d'au moins un châssis latéral (6) est détecté par voie électronique et est transmis par voie électrique à un organe de réglage (33) commandé.

11. Machine de fenaison selon une ou plusieurs des revendications précédentes 3 à 10, **caractérisé en ce que** l'organe de réglage (33) a commande mécanique ou électrique est conformé en vanne d'arrêt (33).
